## Europäisches Patentamt

## European Patent Office

## Office européen des brevets

(11) Numéro de publication: **0 130 171**
**B1**

(12) **FASCICULE DE BREVET EUROPEEN**

(45) Date de publication du fascicule du brevet:
**14.06.89**

(21) Numéro de dépôt: **84870083.7**

(22) Date de dépôt: **22.06.84**

(51) Int. Cl.⁴: **F 01 C 1/344**, F 02 B 53/12

(54) **Moteur rotatif à combustion interne.**

(30) Priorité: **23.06.83 BE 211057**

(43) Date de publication de la demande:
**02.01.85 Bulletin 85/1**

(45) Mention de la délivrance du brevet:
**14.06.89 Bulletin 89/24**

(84) Etats contractants désignés:
**BE DE FR GB IT SE**

(56) Documents cités:
**EP-A- 0 062 447**
**BE-A- 892 384**
**FR-A- 2 004 259**
**FR-A- 2 283 307**
**US-A- 1 412 296**
**US-A- 1 850 833**
**US-A- 2 864 346**
**US-A- 3 902 829**
**US-A- 4 004 556**
**US-A- 4 137 891**

(73) Titulaire: **Becker, Jean Victor, Bierenberg, 36,
B-1640 Rhode St. Genese (BE)**

(72) Inventeur: **Becker, Jean Victor, Bierenberg, 36,
B-1640 Rhode St. Genese (BE)**

(74) Mandataire: **Thirion, Robert et al, Bureau GEVERS S.A.
rue de Livourne 7 bte 1, B-1050 Bruxelles (BE)**

ACTORUM AG

**Description**

La présente invention a pour objet un moteur rotatif à combustion interne fonctionnant suivant le cycle à quatre temps.

Ce moteur, du type décrit dans le brevet US n° 3 902 829, comprend un rotor, un arbre moteur et un stator constitué de deux flasques enserrant le rotor, ce dernier et le stator étant coaxiaux et agencés pour délimiter au moins deux évidements formant deux chambres étanches, en miroir, la totalité des évidements d'une flasque s'étendant sur un secteur de l'ordre de 180° et l'un évidement étant décalé de 180° par rapport à l'autre décalées de 180° l'une par rapport à l'autre, deux organes mobiles identiques décalés l'un de l'autre à 180° et coopérant avec le rotor et le stator pour délimiter, dans chacune des chambres, deux zones étanches, ces chambres et organes mobiles étant agencés pour que ces derniers se déplacent simultanément, en sens contraire et suivant l'axe de l'arbre moteur, dans lesdites chambres pour que l'aspiration et la compression s'effectuent dans les deux zones étanches d'une des chambres tandis que l'allumage-détente et l'échappement s'effectuent dans les deux zones de l'autre chambre, ledit moteur comprenant, dans la chambre où s'effectuent l'admission et la compression, une lumière d'admission du mélange air carburant (moteur à essence) ou d'air (moteur diesel) et, dans la chambre où s'effectuent l'allumage-détente et l'échappement, des moyens d'allumage (moteur à essence) ou des moyens d'injection de carburant (moteur diesel) et une lumière d'échappement, des moyens étant prévus pour assurer le transfert du mélange ou air comprimé de la chambre où s'effectue la compression dans la chambre où s'effectue l'allumage, ces moyens, qui comprennent au moins une soupape qui est agencée de manière à s'ouvrir automatiquement lorsque la pression régnant dans la chambre où s'effectue la compression est supérieure à celle de la chambre où s'effectue l'allumage et à se fermer automatiquement quand la pression régnant dans cette dernière chambre est supérieure à celle régnant dans la chambre où s'effectue la compression, étant agencés pour faire passer ledit mélange ou air comprimé, pendant le transfert et en considérant le sens de rotation du rotor, de l'aval à l'amont de l'organe mobile considéré lorsque celui-ci quitte la chambre de compression et est engagé dans la chambre où s'effectue l'allumage.

L'invention a pour but de procurer dans un moteur rotatif de haut rendement, de construction extrêmement simple et robuste et dans lequel les frottements internes sont réduits au minimum, un agencement particulier des pièces en mouvement qui permet d'assurer au moteur une bonne étanchéité des chambres où s'effectuent la compression et l'allumage-détente et surtout une excellente lubrification de toutes les pièces en mouvement, ainsi qu'un bon refroidissement du moteur.

A cet effet, suivant l'invention, le moteur présente des moyens agencés pour assurer sa lubrification, ces moyens comprenant au moins une cavité, en forme de segment annulaire, réalisée dans chacun des flasques et agencée pour que son ouverture soit tournée vers la base correspondante du rotor coopérant avec un flasque à l'opposé d'une chambre réalisée dans l'autre flasque, cette cavité s'étendant sur un secteur de l'ordre de 160° et la cavité d'un flasque étant décalée d'un angle de 180° par rapport à celle de l'autre flasque, des conduits de passage du lubrifiant agencés dans les flasques pour créer un circuit d'huile à partir d'une ouverture prévue à la périphérie de chaque flasque et raccordée à un dispositif d'alimentation en huile sous pression, tel que pompe à huile connue en soi, amenant le lubrifiant dans les cavités précitées, dans les paliers ménagés dans les flasques pour supporter l'arbre moteur solidaire du rotor et dans des rainures, en forme de segments annulaires, communiquant avec les cavités et ménagées dans les flasques et/ou le rotor dans les zones où ceux-ci sont en contact, chacun des organes mobiles précités comprenant au moins une rainure continue ménagée sur ses faces destinées à coopérer avec les parois latérales et le fond des chambres précitées, cette rainure communiquant avec les cavités susdites lors du passage desdits organes mobiles en regard de ces dernières, des moyens étant également prévus pour assurer le refroidissement du moteur.

Suivant une forme de réalisation de l'invention, la dimension des cavités prise perpendiculairement à l'axe de l'arbre moteur est inférieure à la dimension correspondante des chambres précitées de sorte que les organes mobiles reposent sur la face des flasques tournée vers le rotor, de part et d'autre des cavités susdites, lorsqu'ils se déplacent en regard desdites cavités.

Suivant une autre forme de réalisation de l'invention, la dimension des cavités prise perpendiculairement à l'axe du rotor est supérieure à la dimension correspondante des chambres précitées, au moins un rail de guidage semi-circulaire coaxial à l'arbre étant agencé dans chacune des cavités pour que sa face supérieure soit située au même niveau que la face des flasques coopérant avec les bases du rotor, les organes mobiles prenant appui sur ce rail lorsqu'ils se déplacent en regard desdites cavités.

D'autres détails et particularités de l'invention ressortiront de la description des dessins annexés au présent mémoire et qui représentent, à titre d'exemples non limitatifs, des formes de réalisation particulières du moteur suivant l'invention.

La figure 1 est une vue schématique illustrant, en développement, le mode de fonctionnement du moteur rotatif suivant l'invention.

La figure 2 est une vue en perspective, avec brisures partielles, du moteur illustré à la figure 1.

La figure 3 est une vue en perspective, correspondant à la figure 2 et avec brisures partielles, montrant les flasques écartés du rotor.

La figure 4 est une vue analogue à la figure 1 et montre une variante du moteur illustré à cette figure 1.

La figure 5 est une vue en perspective d'un organe mobile constitué de plusieurs éléments.

La figure 6 est une vue en perspective correspondant à la figure 5 et montrant les éléments constituant l'organe mobile avant leur assemblage.

La figure 7 est une vue en perspective, avec brisures partielles, montrant le rotor et les organes mobiles d'une troisième variante du moteur.

Dans les différentes figures, les mêmes rotations de référence désignent des éléments identiques ou analogues.

Le moteur rotatif suivant l'invention et représenté aux dessins est un moteur à combustion interne du type moteur à essence ou du type moteur diesel fonctionnant suivant le cycle à quatre temps. Ce moteur est essentiellement constitué d'un rotor plein 1, en forme de cylindre droit, d'un arbre 2 calé sur le rotor et coaxial à ce dernier et de deux flasques fixes 3 et 3' disposés de part et d'autre du rotor 1 et présentant chacun un palier 4, 4' pour l'arbre 2. Les rayons du rotor 1 et des flasques 3 et 3' sont identiques, le flasque 3' étant pourvu de pattes de fixation 5, régulièrement réparties à sa périphérie, pour la fixation du moteur à un élément fixe, tel que châssis d'un véhicule. Ces pattes 5 présentent chacune une portion 6 s'étendant perpendiculairement à l'axe de l'arbre 2 et destinée à coopérer avec une portion 7 parallèle correspondante présentée par chacune des pattes 8 portées par le flasque 3, les portions 6 et 7 desdites pattes 5 et 8 étant assemblées, pour maintenir les flasques en contact avec le rotor 2, à l'aide de vis 9 à réglage micrométrique permettant d'assurer une bonne étanchéité rotor-flasques avec un minimum de friction entre ledit rotor et les flasques fixes.

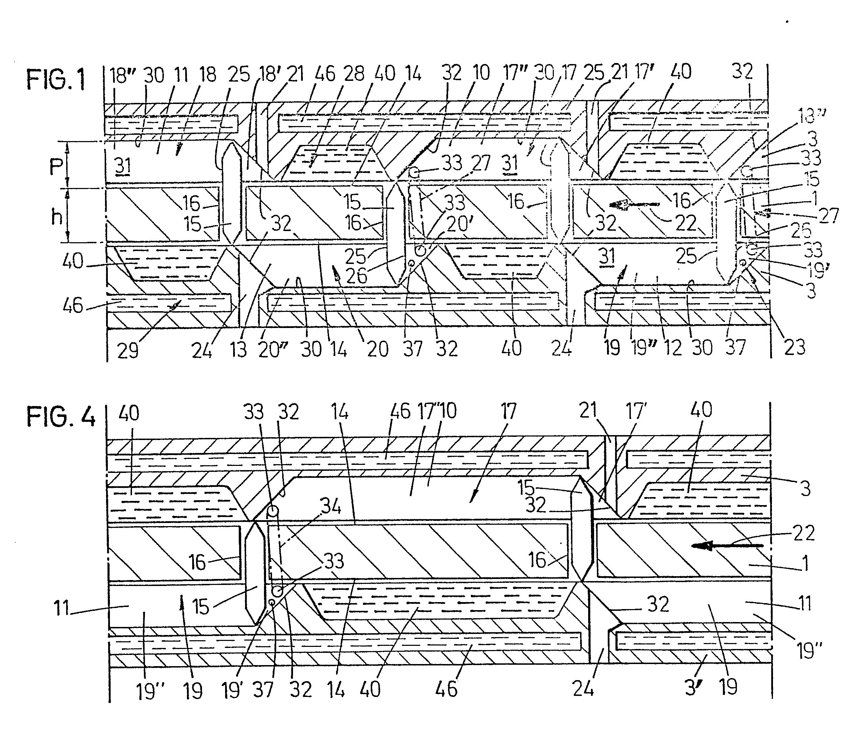

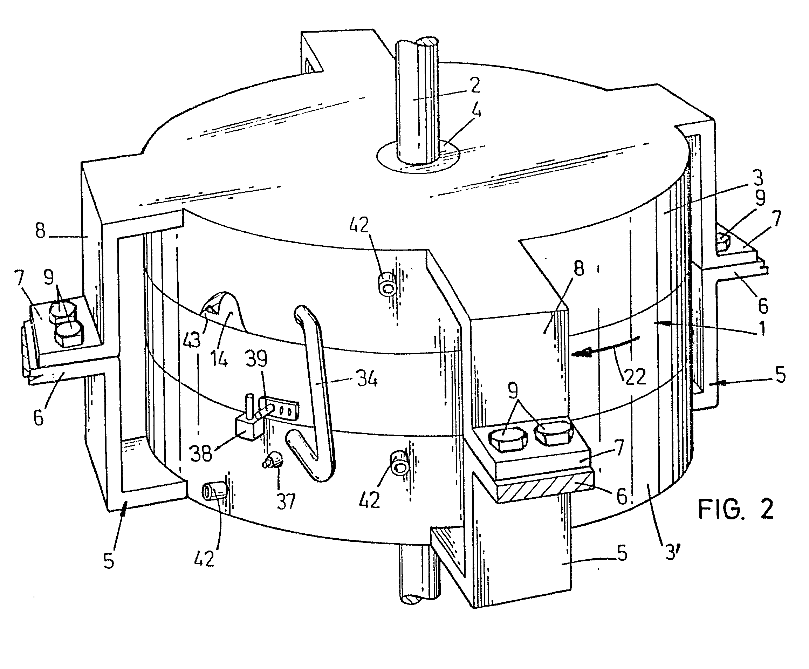

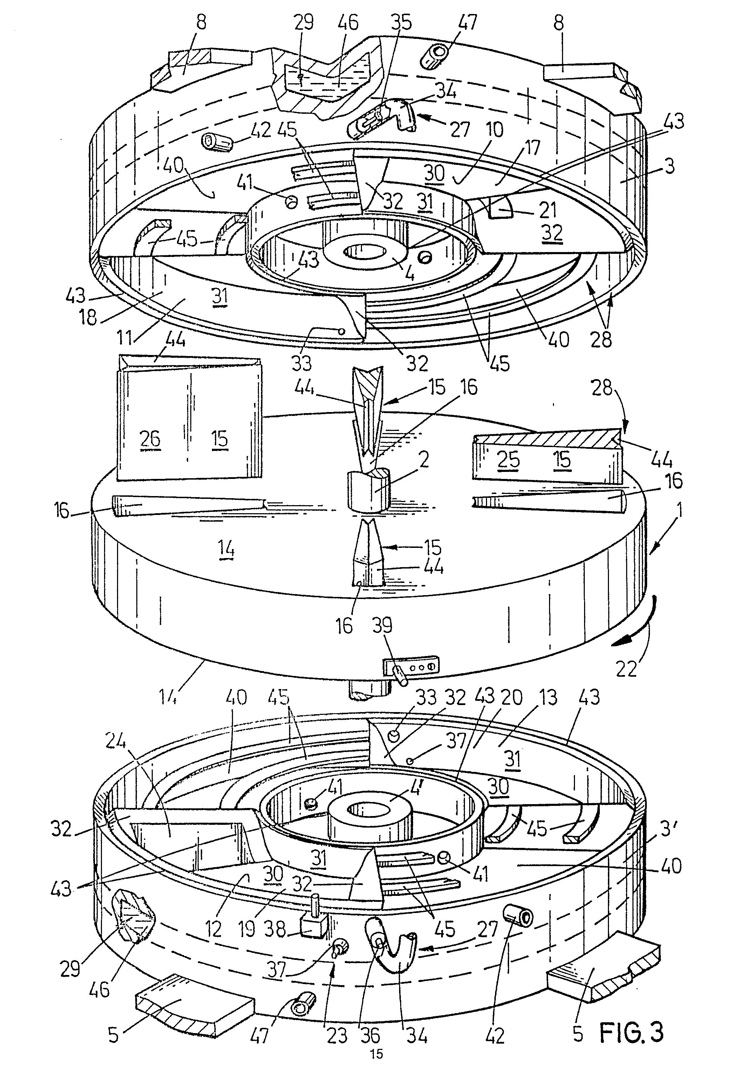

Dans la forme de réalisation du moteur illustrée aux figures 1 à 3, le flasque 3 présente deux évidements, en forme de segments annulaires, 10, 11 réalisés sur un secteur de l'ordre de 90° et décalés l'un par rapport à l'autre de 180°, tandis que le flasque 3' présente également deux évidements, en forme de segments annulaires, 12 et 13 réalisés sur un secteur de l'ordre de 90° et décalés d'un angle de 180° l'un par rapport à l'autre, les évidements du flasque 3 étant en outre décalés de 90° par rapport aux évidements du flasque 3'. Ces évidements 10 à 13 forment avec les bases 14 du rotor 2 quatre chambres étanches dont les profils sont symétriques par rapport auxdites bases du rotor, ce dernier portant quatre organes mobiles 15 identiques agencés radialement dans des ouvertures 16 pratiquées de part en part dans le rotor 2 et décalées l'une par rapport à l'autre d'un angle de 90°. Ces organes mobiles 15 sont destinés, lors de la rotation du rotor et guidés dans les ouvertures 16 et par les évidements 10 à 13, à coulisser librement dans lesdites ouvertures 16, suivant une direction parallèle à l'axe du rotor, pour faire saillie alternativement par rapport aux bases 14 du rotor et coopérer avec les parois des évidements 10 à 13 pour délimiter dans chacune des chambres 17 à 20, formées par les évidements 10 à 13 et les bases 14, du rotor, deux zones 17', 17'' à 20', 20'' à volumes variables étanches l'une par rapport à l'autre. Pour obtenir une bonne étanchéité entre les zones susdites et à travers les ouvertures 16 du rotor, les organes 15 ont une dimension prise parallèlement à l'axe de l'arbre 2 qui est égale à la hauteur h du rotor 1 augmentée de la profondeur p des évidements 10 à 13, la section, par un plan passant par l'axe de l'arbre 2, de leur partie destinées à faire alternativement saillie par rapport aux bases 14 du rotor étant pratiquement égale à la section correspondante des évidements 10 à 13, tandis que leur section, par un plan perpendiculaire à l'axe de l'arbre 2, est pratiquement égale à la section correspondante des ouvertures 16. Comme montré à la figure 1, les chambres 17 à 20 et les organes 15 sont agencés pour que ceux-ci se déplacent deux à deux, simultanément et en sens contraire, pour pénétrer respectivement dans les chambres 17 et 18 et dans les chambres 19 et 20.

L'aspiration s'effectue simultanément dans les zones 17' et 18' des chambres 17 et 18 tandis que la compression s'effectue simultanément dans les zones 17'' et 18'' de ces mêmes chambres. Par contre, l'allumage-détente se produit simultanément dans les zones 19' et 20' des chambres 19 et 20 tandis que l'échappement s'effectue simultanément dans les zones 19'' et 20'' de ces dernières chambres. Chacune des chambres 17 et 18 présente une lumière d'admission 21 du mélange air carburant dans le cas d'un moteur à essence ou d'air dans le cas d'un moteur diesel. Ces lumières d'admission 21 sont situées, en considérant le sens de rotation du rotor schématisé par la flèche 22, à proximité de l'extrémité des chambres 17 et 18 où s'introduisent les organes mobiles 15. Chacune des chambres 19 et 20 présentent, d'une part, des moyens 23 d'allumage (moteur à essence) ou d'injection de carburant (moteur diesel) situés, en considérant le sens de rotation du rotor, à proximité de l'extrémité de ces chambres où s'introduisent les organes mobiles 15 et, d'autre part, à proximité de leur autre extrémité, une lumière d'échappement 24.

La compression est réalisée par la face 25 des organes mobiles 15 progressant dans les chambres 17 et 18 tandis que l'allumage-détente propulse le rotor en agissant sur les faces 26 des organes 15 situés dans les chambres 19 et 20. Pour ce faire, le moteur suivant l'invention comprend des moyens de transfert 27 du mélange air carburant ou de l'air comprimé des zones 17'' et 18'' des chambres 17 et 18 où s'effectue la compression dans les zones 19' et 20' des chambres 19 et 20 dans lesquelles s'effectuent l'allumage et la détente. Ces moyens 27, qui seront plus amplement décrits ci-après, sont agencés pour faire passer le mélange air carburant ou l'air comprimé, pendant le transfert et en considérant le sens de rotation du rotor, de la face avant 25 des organes 15 vers leur face arrière 26 lorsque lesdits organes quittent les chambres 17 et 18 et sont engagés dans les chambres 19 et 20. Le moteur suivant l'invention présente des moyens 28 et 29 agencés pour assurer respectivement la lubrification des pièces en mouvement et le refroidissement. Il est évident que ce moteur sera particulièrement souple et puissant, quel que soit son régime, du fait que l'on aura, par tour de rotor, huit explosions.

Dans la forme de réalisation illustrée aux dessins, le fond 30 des évidements 10 à 13 réalisés dans les flasques 3 et 3' est perpendiculaire à l'axe de l'arbre 2 du rotor et en forme de couronne dont le centre est situé sur cet axe. Les parois latérales 31 de ces évidements sont cylindriques et coaxiales audit rotor. Les fonds 30 des évidements se raccordent aux bases 14 du rotor 2 par des surfaces hélicoïdales 32 dont le pas est pratiquement égal à la dimension des organes mobiles 15 prise parallèlement à l'axe de l'arbre 2 du rotor. La section de ces organes mobiles 15, par un plan passant par l'axe de l'arbre 2, est un quadrilatère dont les angles sont droits, tandis que la section de ces organes, par un plan perpendiculaire à l'axe du rotor, correspond à un secteur de la couronne précitée, les dimensions dudit quadrilatère étant telles que les organes sont constamment en contact avec le fond 30 et les parois latérales 31 d'un évidement et, lorsqu'ils coulissent dans les ouvertures 16 du rotor 1, avec les surfaces hélicoïdales 32 et les parois latérales 31 des évidements.

Comme montré aux dessins, les moyens 27, agencés pour transférer le mélange air-carburant ou l'air comprimé des zones 17' et 18' des chambres 17 et 18 aux zones 19' et 20' des chambres 19 et 20, comprennent un conduit 33 réalisé dans chacun des flasques 3 et 3' de manière à déboucher, d'une part, dans chacune des zones susdites à proximité de l'endroit où les surfaces hélicoïdales 32 se raccordent aux bases 14 du rotor et, d'autre part, à la périphérie des flasques. Les conduits 33 correspondants sont réunis par une tubulure 34 extérieure au moteur et dans laquelle sont agencées deux soupapes 35 et 36 qui sont agencées pour s'ouvrir et se fermer automatiquement lorsque le moteur fonctionne. Les soupapes 35 s'ouvrent donc automatiquement lorsque la pression régnant dans les zones 17' et 18' où s'effectue la compression est supérieure à celle régnant dans la tubulure 34 tandis que les soupapes 36 s'ouvrent automatiquement lorsque la pression régnant dans la tubulure 34 est supérieure à la pression régnant dans les zones 19' et 20' où s'effectue l'allumage. Donc, les soupapes 36, qui étaient fermées par la pression due à la combustion dans les chambres 19 et 20, s'ouvrent du fait que les organes 15, en s'introduisant dans les chambres 19 et 20, créent une dépression dans les zones 19' et 20' de ces chambres. Par contre, ces soupapes 35 se ferment automatiquement lorsque la pression dans la tubulure 34 est supérieure à celle des zones 17' et 18' et les soupapes 36 se ferment automatiquement lorsque la pression dans les zones 19' et 20' est supérieure à celle de la tubulure. C'est ainsi que le mélange ou l'air comprimé compris dans la tubulure 34 au moment de l'allumage ne rétrograde pas dans les zones 17' et 18', ce qui entraînerait une perte de rendement du moteur. Ce dernier comprend, pour la mise en marche du moteur, des moyens non représentés agencés pour fermer temporairement et mécaniquement les soupapes 36 afin de permettre une compression suffisante du mélange ou de l'air pour assurer les premiers allumages. Ces moyens pourraient notamment être constitués par des ressorts tarés associés auxdites soupapes.

Pour assurer un bon échappement des gaz brûlés, les lumières d'échappement 24 débouchent, dans les chambres 19 et 20, à l'endroit des surfaces hélicoïdales 32, ces lumières s'étendant sur au moins les deux tiers de la dimension des chambres prise perpendiculairement à l'axe de l'arbre 2 du rotor.

Les moyens d'allumage 23 peuvent comprendre, comme montré aux figures 1 à 3, dans le cas d'un moteur à essence et tel que représenté aux dessins, deux bougies 37 décalées de 180° et montées sur le flasque 3', où sont prévues les chambres 19 et 20 dans lesquelles s'effectue l'allumage, pour déboucher dans les zones 19' et 20' de ces chambres. Un rupteur 38 est fixé à ce flasque 3' à proximité de chacune des bougies 37 et deux éléments de commande 39, fixés à la périphérie du rotor 1 et décalés de 180°, sont agencés pour coopérer avec les rupteurs 38 pour rompre le courant dans le système d'allumage du moteur pour produire les étincelles aux bougies 37 lorsque les organes mobiles 15 ont pénétré dans les chambres 19 et 20 et sont situés légèrement en aval, en considérant le sens de rotation du rotor 1, des électrodes des bougies 37. Dans le cas d'un moteur diesel, les bougies 37 sont remplacées par des injecteurs de carburant et les éléments de commande 39 sont alors agencés pour déclencher l'injection quand les organes mobiles 15 ont pénétré dans les chambres 19 et 20 et ont dépassé légèrement l'orifice d'injection prévu dans chacune des chambres. Pour autoriser la mise au point du moteur, les éléments de commande 39 sont fixés au rotor de manière à ce que leur position puisse être réglée suivant une circonférence de la surface latérale du rotor.

Dans la forme de réalisation du moteur illustrée aux figures 1 à 3, les moyens 28 précités pour assurer la lubrification comprennent dans chacun des flasques 3 et 3', deux cavités 40, en forme de segments annulaires, régulièrement disposées entre les évidements 10, 11 et 12, 13. Ces cavités sont donc agencées pour que leur ouverture soit tournée vers les bases 14 du rotor obturant ces évidements pour former les chambres (17, 18, 19 et 20) et pour qu'une cavité d'un flasque soit située, rotor interposé, en regard d'un évidement de l'autre flasque. Chacune desdites cavités s'étend avantageusement sur un secteur de l'ordre de 70°. Des conduits 41 de passage du lubrifiant sont agencés dans les flasques 3 et 3' pour créer un circuit d'huile à partir d'une ouverture 42 prévue à la périphérie de chaque flasque et raccordée à un dispositif d'alimentation en huile sous pression, tel qu'une pompe à huile bien connue. Les conduits 41 sont agencés pour amener le lubrifiant, d'une part, dans les cavités 40 présentées par chaque flasque et, d'autre part, via les cavités 40, dans les paliers 4 et 4' de l'arbre 2 du rotor. Ces cavités 40 permettent aussi l'alimentation en huile de lubrification d'une ou plusieurs rainures 43, en forme de segments annulaires, ménagées dans les flasques 3 et 3" ou dans le rotor 2 dans les zones où lesdits flasques et rotor sont en contact à l'endroit et de part et d'autre des chambres (17 à 20) susdites. La lubrification des organes mobiles 15 est assurée grâce à au moins une rainure 44 continue ménagée sur tout leur pourtour, c'est-à-dire sur leurs faces destinées à être en contact avec les fonds et les parois latérales des évidements 10 à 13 ainsi qu'avec les surfaces hélicoïdales 32 de raccordement des fonds des évidements aux bases 14 du rotor, cette rainure 44 des organes 15 étant alimentée en huile à partir des cavités 40 lors du passage desdits organes mobiles 15 en regard de ces dernières. En outre, ces cavités 40, qui sont fermées par les bases 14 du rotor 1, assurent le dépôt d'un film d'huile dans les zones de ces bases 14 qui coopèrent avec lesdites cavités, de sorte que pratiquement toutes les surfaces en contact des éléments mobiles du moteur, y compris les paliers 4 et 4' susdits, sont parfaitement lubrifiées grâce aux cavités 40, aux rainures 43 prévues sur les flasques 3 et 3' et aux rainures 44 situées à la périphérie des organes 15. Cette excellente lubrification évite l'échauffement des pièces constitutives du moteur et facilite leur refroidissement par les moyens 29 décrits ci-après.

La dimension des cavités 40 prise perpendiculairement à l'axe de l'arbre 2 pourrait être soit inférieure, soit supérieure à la dimension correspondante des évidements 10 à 13. Dans le cas où cette dimension est inférieure, les organes mobiles prennent appui, lorsqu'ils se déplacent autour de l'axe de l'arbre 2 en regard des cavités 40, sur la face des flasques 3 et 3' tournées vers les bases 14 du rotor, cet appui s'effectuant de part et d'autre des cavités. Dans la forme de réalisation illustrée aux figures 1 à 3, cette dimension est supérieure à celle des évidements de manière à obtenir une meilleure circulation d'huile dans les rainures 43 des flasques et les rainures 44 des organes 15. Des rails de guidage 45, semi-circulaires et coaxiaux à l'arbre 2, sont agencés dans chacune des cavités 40 et ces rails de guidage ont leur face supérieure qui est située dans le même plan que les faces des flasques 3 et 3' coopérant avec les bases 14 du rotor et ce de manière à ce que les organes mobiles 15 s'appuient sur la face supérieure de ces rails lorsqu'ils se déplacent en regard des cavités 40.

En ce qui concerne les moyens 29 susdits assurant le refroidissement du moteur, ceux-ci comprennent une chambre 46 pratiquée dans chacun des flasques 3 et 3', ces chambres 46 étant mises en communication, par des conduits 47 débouchant à la périphérie desdits flasques et connectés à un circuit de refroidissement connu en soi et non représenté.

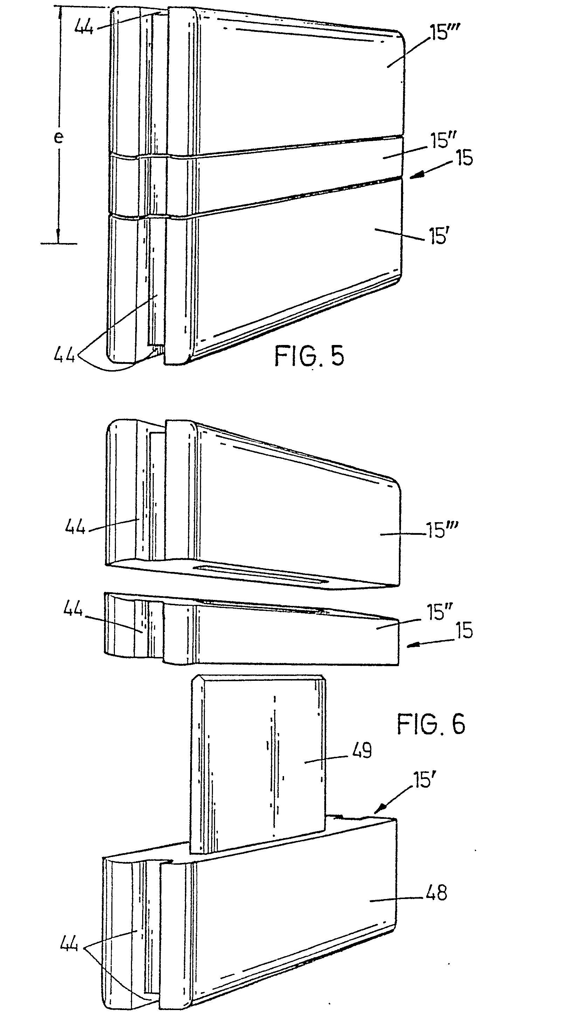

Dans la forme de réalisation du moteur suivant l'invention, illustrée schématiquement à la figure 4, chacun des flasques 3 et 3' ne comprend qu'un seul évidement, en forme de segment annulaire, 10, 11 constituant une chambre 17, 19 et s'étendant sur un secteur de l'ordre de 180°, la chambre 17 étant décalée de 180° par rapport à la chambre 19. Une lumière d'admission 21 est prévue dans la chambre 17 où s'effectuent l'admission et la compression, tandis qu'une lumière d'échappement 24 et une bougie 37 ou un injecteur de carburant sont prévus dans la chambre 19 où s'effectuent l'allumage-détente et l'échappement, les organes mobiles 15 étant au nombre de deux et étant décalés de 180°. Ce moteur, dans lequel se produisent deux explosions par tour de rotor, est donc équivalent à un moteur à quatre cylindres classiques.

Comme montré aux figures 5 et 6, les organes mobiles 15 pourraient, suivant l'invention, être réalisés en plusieurs segments assemblés entre eux par emboîtement. Un premier segment 15' qui comprend la partie 48 de l'organe mobile destinée à faire saillie dans la ou les chambres 19 et 20 où s'effectuent l'allumage-détente et l'échappement et une pièce de liaison 49 permettant d'assembler les autres segments qui sont enfilés sur la pièce 49, au segment 15', ce segment 15' étant réalisé par exemple en fonte pour offrir une bonne résistance aux pressions et températures élevées, ainsi qu'une bonne étanchéité et une auto-lubrification, la pièce de liaison 49 présentant une bonne dureté, tout en restant légère, et étant peu conductrice de la chaleur. Un deuxième segment 15", qui est toujours situé à l'intérieur du rotor, jouera principalement le rôle de ressort et d'amortisseur et la matière qui le constitue présentera donc une certaine élasticité. Le troisième segment 15''', qui est destiné à faire saillie dans les chambres 17 et 18 où s'effectuent l'admission et la compression, doit seulement offrir une bonne résistance à la pression, offrir une bonne étanchéité et être auto-lubrifiant. Ce dernier segment pourrait également présenter une certaine élasticité et être réalisé en une matière synthétique, telle qu'une matière plastique appropriée. La dimension e reprise à la figure 5 correspond à l'épaisseur du rotor 1.

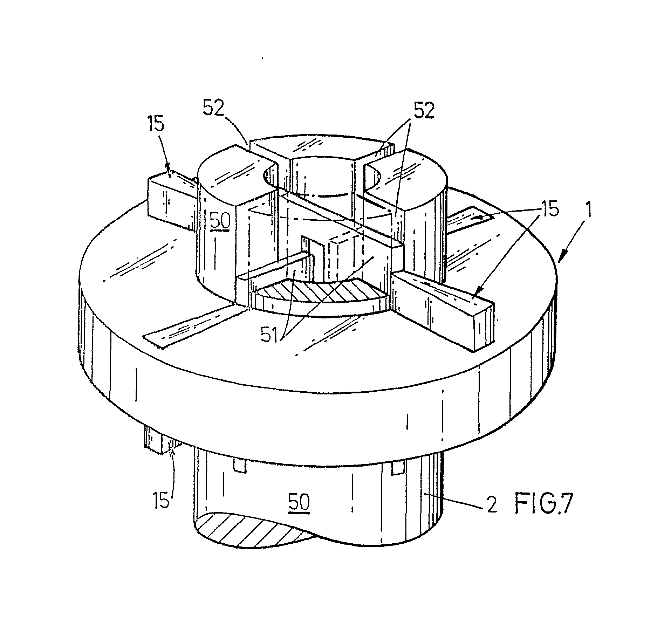

Dans le cas où le moteur comprend quatre organes mobiles 15 associés au rotor, l'arbre 2 et le rotor 1 peuvent être agencés, comme montré à la figure 7, pour que la surface latérale 50 de l'arbre 2 remplace les faces latérales internes 31 des évidements 10–13. Les organes mobiles 15 diamétralement opposés sont avantageusement réunis entre eux, deux à deux, de manière rigide. La liaison de ces organes 15 s'effectue par l'intermédiaire de deux pièces de liaison 51 s'étendant à travers des ouvertures 52 ménagées dans l'arbre 2 suivant deux plans perpendiculaires passant par l'axe de l'arbre 2. Le couplage des organes 15 deux à deux et la disposition du rotor et de l'arbre présentent l'avantage d'assurer une très bonne étanchéité au moteur et de permettre l'amortissement des chocs que pourraient subir les organes mobiles 15 lorsqu'ils abordent les surfaces hélicoïdales 32 précitées. La lubrification des organes s'effectue avantageusement à travers un conduit aménagé dans l'arbre 2.

C'est ainsi que l'on pourrait notamment prévoir, pour augmenter le taux de compression du moteur, une saillie prévue sur la face 26 de chacun des organes mobiles 15 et destinée à réduire le volume de la zone du ou des évidements où se produit l'allumage, cette saillie, ménagée dans la partie des organes supportant l'explosion, coopérant avec un évidement correspondant réalisé dans le rotor, à partir d'une des bases 14 et de l'ouverture 16, pour autoriser le libre mouvement des organes mobiles 15 dans les ouvertures 16 du rotor 1, tout en gardant l'étanchéité entre ces organes 15 et ouvertures 16.

On pourrait encore prévoir dans le moteur à essence, au lieu des bougies classiques, un élément relié en permanence à une source de courant pour le porter à incandescence et le maintenir dans cet état pendant toute la période de fonctionnement du moteur.

## Revendications

1. Moteur rotatif à combustion interne fonctionnant suivant le cycle à quatre temps, comprenant un rotor (1), un arbre moteur (2) et un stator constitué de deux flasques (3, 3') enserrant le rotor (1), ce dernier et le stator étant coaxiaux et agencés pour délimiter au moins deux évidements (10, 11) formant deux chambres étanches (17, 19), en miroir, la totalité des évidements d'une flasque s'étendant sur un secteur de l'ordre de 180° et l'un évidement étant décalé de 180° par rapport à l'autre, deux organes mobiles identiques (15) décalés l'un de l'autre à 180° et coopérant avec le rotor et le stator pour délimiter, dans chacune des chambres, deux zones étanches (17', 17'', et 19', 19''), ces chambres et organes mobiles étant agencés pour que ces derniers se déplacent simultanément, en sens contraire et suivant l'axe de l'arbre moteur (2), dans lesdites chambres pour que l'aspiration et la compression s'effectuent dans les deux zones étanches (17', 17'') d'une des chambres (17) tandis que l'allumage-détente et l'échappement s'effectuent dans les deux zones (19', 19'') de l'autre chambre (19), ledit moteur comprenant, dans la chambre (17) où s'effectuent l'admission et la compression, une lumière d'admission (21) du mélange air carburant (moteur à essence) ou d'air (moteur diesel) et, dans la chambre (19) où s'effectuent l'allumage-détente et l'échappement, des moyens (23) d'allumage (moteur à essence) ou des moyens d'injection de carburant (moteur diesel) et une lumière d'échappement (24), des moyens (27) étant prévus pour assurer le transfert du mélange ou air comprimé de la chambre (17) où s'effectue la compression dans la chambre (19) où s'effectue l'allumage, ces moyens (27), qui comprennent au moins une soupape (36) qui est agencée de manière à s'ouvrir automatiquement lorsque la pression régnant dans la chambre (17) où s'effectue la compression est supérieure à celle de la chambre (19) où s'effectue l'allumage et à se fermer automatiquement quand la pression régnant dans cette dernière chambre (19) est supérieure à celle régnant dans la chambre (17) où s'effectue la compression, étant agencés pour faire passer ledit mélange ou air comprimé, pendant le transfert et en considérant le sens de rotation du rotor, de l'aval à l'amont de l'organe mobile (15) considéré lorsque celui-ci quitte la chambre de compression (17) et est engagé dans la chambre (19) où s'effectue l'allumage, ledit moteur étant caractérisé en ce qu'il présente des moyens (28) agencés pour assurer sa lubrification, ces moyens (28) comprenant au moins une cavité (40), en forme de segment annulaire, réalisée dans chacun des flasques (3, 3') et agencée pour que son ouverture soit tournée vers la base (14) correspondante du rotor coopérant avec un flasque à l'opposé d'une chambre (17, 19) réalisée dans l'autre flasque, cette cavité (40) s'étendant sur un secteur de l'ordre de 160° et la cavité d'un flasque étant décalée d'un angle de 180° par rapport à celle de l'autre flasque, des conduits (41) de passage du lubrifiant agencés dans les flasques pour créer un circuit d'huile à partir d'une ouverture (42) prévue à la périphérie de chaque flasque et raccordée à un dispositif d'alimentation en huile sous pression, tel que pompe à huile connue en soi, amenant le lubrifiant dans les cavités précitées, dans les paliers ménagés dans les flasques pour supporter l'arbre moteur (2) solidaire du rotor et dans des rainures (43), en forme de segments annulaires, communiquant avec les cavités (40) et ménagées dans les flasques et/ou le rotor dans les zones où ceux-ci sont en contact, chacun des organes mobiles (15) précités comprenant au moins une rainure continue (44) ménagée sur ses faces destinées à coopérer avec les parois latérales et le fond des chambres (17, 19) précitées, cette rainure (44) communiquant avec les cavités (40) susdites lors du passage desdits organes mobiles (15) en regard de ces dernières, des moyens (29) étant également prévus pour assurer le refroidissement du moteur.

2. Moteur rotatif suivant la revendication 1, caractérisé en ce que la dimension des cavités (40) prise perpendiculairement à l'axe de l'arbre moteur (2) est inférieure à la dimension correspondante des chambres (17, 19) précitées de sorte que les organes mobiles (15) reposent sur la face des flasques (3, 3') tournée vers le rotor, de part et d'autre des cavités susdites, lorsqu'ils se déplacent en regard desdites cavités.

3. Moteur rotatif suivant la revendication 1, caractérisé en ce que la dimension des cavités (40) prise perpendiculairement à l'axe du rotor est supérieure à la dimension correspondante des chambres (17, 19) précitées, au moins un rail de guidage (45) semi-circulaire coaxial à l'arbre (2) étant agencé dans chacune des cavités (40) pour que sa face supérieure soit située au même niveau que la face des flasques (3, 3') coopérant avec les bases (14) du rotor (1), les organes mobiles (15) prenant appui sur ce rail (45) lorsqu'ils se déplacent en regard desdites cavités.

4. Moteur rotatif suivant l'une quelconque des revendications 1 à 3, caractérisé en ce que les moyens (29) agencés pour assurer le refroidissement du moteur comprennent une chambre (46) pour un liquide de refroidissement ménagée dans au moins le flasque (3') présentant l'évidement dans lequel les organes mobiles (15) délimitent la chambre (19) précitée où s'effectue l'allumage et l'échappement, cette chambre étant mise en communication, à la périphérie du flasque, avec un circuit de refroidissement connu en soi.

5. Moteur rotatif suivant l'une quelconque des revendications 1 à 4, caractérisé en ce qu'il comprend des moyens agencés pour commander la fermeture de la soupape (36) lors du démarrage du moteur.

6. Moteur rotatif suivant l'une quelconque des revendications 1 à 5, caractérisé en ce que chacun des flasques (3, 3') susdits comprend deux évidements (10, 11–12, 13) formant deux chambres étanches (17, 18–19, 20) qui s'étendent sur un secteur de l'ordre de 90° et décalées l'une par rapport à l'autre de 180°, les chambres d'un flasque étant décalées de 90° par rapport à celles de l'autre flasque, le rotor comprenant quatre organes mobiles (15) disposés dans des ouvertures (16) décalées de 90° l'une par rapport à l'autre, l'admission et la compression s'effectuant simultanément dans les deux chambres (17, 18) d'un flasque, tandis que l'allumage-détente et l'échappement s'effectuent simultanément dans les deux chambres (19, 20) de l'autre flasque, chacune de ces dernières chambres (19, 20) présentant des moyens (23) d'allumage ou d'injection de carburant ainsi qu'une lumière d'échappement (24) décalés de 180°, une lumière d'admission (21) étant prévue dans chacune des chambres (17, 18) de l'autre flasque, de telle sorte que les lumières d'admission (21) soient décalées de 180°, les moyens (27) susdits pour assurer le transfert du mélange ou air comprimé d'une chambre d'un flasque à celle de l'autre flasque étant agencés pour que ce transfert se produise, en considérant le sens de rotation du rotor, d'une chambre (17, 18) où s'effectue la compression à la chambre (19, 20) où s'effectue l'allumage immédiatement voisine située en aval, les organes mobiles (15) diamétralement opposés étant soit libres l'un par rapport à l'autre, soit réunis entre eux, deux à deux, de manière rigide, la liaison desdits organes s'effectuant à travers des ouvertures ménagées, suivant deux plans perpendiculaires passant par l'axe de l'arbre (2), soit dans les flasques (3, 3') et l'arbre (2), soit dans cet arbre (2).

7. Moteur rotatif suivant l'une quelconque des revendications 1 à 6, caractérisé en ce qu'il comprend des moyens, tels que vis micrométriques (9), pour régler la pression des flasques (3, 3') sur le rotor (1).

## Claims

1. A rotary four-stroke internal combustion engine, comprising a rotor (1), a drive shaft (2), and a stator comprising two flanges (3, 3') enclosing the rotor (1), the latter and the stator being coaxial and arranged to define at least two recesses (10, 11) which form two sealed chambers (17, 19) in mirror-image fashion, the totality of the recesses of a flange extending over a sector of the order of 180° and one recess being offset 180° with respect to the other, two identical movable elements (15) offset by 180° and co-operating with the rotor and stator to define two sealed zones (17', 17" and 19', 19") in each of the chambers, said chambers and movable elements being so arranged that the latter moves simultaneously in opposite directions and along the axis of the drive shaft (2) in said chambers so that intake and compression take place in the two sealed zones (17', 17") of one of the chambers (17) while ignition-expansion and exhaust take place in the two zones (19', 19") of the other chamber (19), said engine comprising, in the chamber (17) where intake and compression take place, an admission port (21) for the air and fuel mixture (petrol engine) or air (diesel engine) and, in the chamber (19) where ignition-expansion and exhaust take place, ignition (petrol engine) means (23) or fuel injection means (diesel engine) and an exhaust port (24), means (27) being provided for transferring the mixture or compressed air from the chamber (17) where compression takes place to the chamber (19) where ignition takes place, said means (27), which comprise at least one valve (36) adapted to open automatically when the pressure in the chamber (17) where compression takes place is greater than the pressure in the chamber (19) where ingition takes place and close automatically when the pressure in said latter chamber (19) is greater than that in the chamber (17) where compression takes place, being adapted to pass said mixture or compressed air, during the transfer and as considered in the direction of rotation of the rotor, from downstream to upstream of the movable element (15) considered when the latter leaves the compression chamber (17) and is engaged in the chamber (19) where ignition takes place, said engine being characterised in that it comprises means (28) adapted to provide its lubrication, said means (28) comprising at least one cavity (40) in the form of an annular segment made in each of the flanges (3, 3') and arranged so that its opening faces the corresponding base (14) of the rotor co-operating with a flange remote from a chamber (17, 19) formed in the other flange, said cavity (14) extending over a sector of the order of 160° and the cavity of one flange being offset 180° with respect to that of the other flange, lubricant conduits (41) being provided in the flanges to create an oil circuit from an opening (42) provided at the periphery of each flange and connected to a pressure oil supply device, such as an oil pump known per se, which supplies the lubricant to the said cavities, in bearings formed in the flanges to support the drive shaft (2) connected to the rotor and in grooves (43) in the form of annular segments communicating with the cavities (40) and formed in the flanges and/or the rotor in the zones where the same are in contact, each of the said movable elements (15) comprising at least one continuous groove (44) formed on the surfaces adapted to co-operate with the side walls and the base of the said chambers (17, 19), said groove (44) communicating with the said cavities (40) when said movable elements (15) move opposite the said cavities (40), means (29) also being provided to cool the engine.

2. A rotary engine according to claim 1, characterised in that the dimension of the cavities (40) measured perpendicularly to the axis of the drive shaft (2) is less than the corresponding dimension of the said chambers (17, 19) so that the movable elements (15) rest on the surface of the flanges (3, 3') facing the rotor on either side of the said cavities when they move opposite said cavities.

3. A rotary engine according to claim 1, characterised in that the dimension of the cavities (40) measured perpendicularly to the axis of the rotor is greater than the corresponding dimension of the said chambers (17, 19), at least one semicircular guide rail (45) coaxial with the shaft (2) being arranged in each of the cavities (40) so that its top surface is situated at the same level as that surface of the flanges (3, 3') which co-operates with the bases (14) of the rotor (1), the movable elements (15) bearing on said rail (45) when they move with respect to said cavities.

4. A rotary engine according to any one of claims 1 to 3, characterised in that the means (29) adapted to provide engine cooling comprise a chamber (46) for a cooling liquid formed in at least the flange (3') having the recess in which the movable elements (15) define the said chamber (19) in which ignition and exhaust take place, said chamber being brought into communication, at the periphery of the flange, with a cooling circuit known per se.

5. A rotary engine according to any one of claims 1 to 4, characterised in that it comprises means adapted to control closure of the valve (36) on starting of the engine.

6. A rotary engine according to any one of claims 1 to 5, characterised in that each of the said flanges (3, 3') comprises two recesses (10, 11–12, 13) forming two sealed chambers (17, 18–19, 20) which extend over a sector of the order of 90° and offset from one another by 180°, the chambers of one flange being offset 90° with respect to those of the other flange, the rotor comprising four movable elements (15) disposed in apertures (16) offset 90° from one another, intake and compression taking place simultaneously in the two chambers (17, 18) of one flange while the ignition-expansion and exhaust take place simultaneously in the two chambers (19, 20) of the other flange, each of these latter chambers (19, 20) having means (23) for ignition or injection of fuel and an exhaust port (24) offset by 180°, an intake port (21) being provided in each of the chambers (17, 18) of the other flange so that the intake ports (21) are offset 180°, the said means (27) for transferring the mixture or compressed air from one flange chamber to that of the other flange being adapted so that such transfer takes place, as considered in the direction of rotation of the rotor, from a chamber (17, 18) in which compression takes place to the immediately adjacent downstream chamber (19, 20) in which ignition takes place, the diametrically opposite movable elements (15) being either free with respect to one another or interconnected in pairs rigidly, the connection between the said elements being via openings formed along two perpendicular planes passing through the axis of the shaft (2), either in the flanges (3, 3') and the shaft (2), or in said shaft (2).

7. A rotary engine according to any one of claims 1 to 6, characterised in that it comprises means such as micrometer screws (9) to control the pressure of the flanges (3, 3') on the rotor (1).

**Patentansprüche**

1. Rotationsmotor mit innerer Verbrennung, der im vier-Takt-Zyklus arbeitet, bestehend aus einem Rotor (1), einer Motorwelle (2) und einem Stator, der von aus zwei Flanschen (3, 3') gebildet ist und den Rotor (1) einschließt, wobei der Rotor (1) und der Stator koaxial und so angeordnet sind, daß sie mindestens zwei Aussparungen (10, 11) abgrenzen und zwei im Spiegelbild dichte Kammern (17, 19) bilden, die Gesamtheit der Aussparungen eines Flansches sich über einen Sektor von 180° ausbreiten und die eine Aussparung im Vergleich zur anderen um 180° versetzt ist, mit zwei beweglichen, identischen Teilen (15), die zueinander um 180° versetzt sind und mit dem Rotor und dem Stator, um in jeder der Kammern zwei dichte Zonen (17', 17'', und 19', 19'') abzugrenzen, zusammenwirken, diese Kammern und beweglichen Teile sind so angeordnet, damit sich diese letzteren gleichzeitig in entgegengesetzter Richtung und entlang der Achse der Motorwelle (2) verschieben, so daß in den besagten Kammern das Ansaugen und die Verdichtung in den beiden dichten Zonen (17', 17'') der einen der Kammern (17) erfolgt, während die Zündung/Entspannung und der Auslaß in den beiden Zonen (19', 19'') der anderen Kammer (19) erfolgen, der besagte Motor hat in der Kammer (17), in der die Zufuhr und die Verdichtung erfolgen, eine Ansaugöffnung (21) für die Zufuhr eines Luft-Brennstoff-Gemisches (bei Benzinmotoren) oder von Luft (bei Dieselmotoren) und in der Kammer (19), in der die Zündung/Entspannung und der Auslaß erfolgen, Mittel (23) zur Zündung (beim Benzinmotor) oder Mittel zur Brennstoff-Einspritzung (beim Dieselmotor) und eine Auslaßöffnung (24), und Mittel (27), die vorgesehen sind, um die Überführung des Gemisches oder der Druckluft von der Kammer (17), in die Verdichtung erfolgt, in die Kammer (19), in der die Zündung erfolgt, sicherzustellen, diese Mittel (27) haben mindestens ein Ventil (36), das so angeordnet ist, daß es sich automatisch öffnet, wenn der Druck, der in der Kammer (17) herrscht, in der die Verdichtung erfolgt, höher ist als der der Kammer (19), in der die Zündung erfolgt, und daß das Ventil (36) sich automatisch schließt, wenn der Druck, der in dieser letzteren Kammer (19) herrscht, größer ist als der, der in der Kammer (17) herrscht, in der die Verdichtung erfolgt, diese Mittel sind vorgesehen, um das besagte Gemisch oder die komprimierte Luft weiterzuleiten während des Übergangs – und unter Berücksichtigung der Drehrichtung des Rotors – von unterhalb nach oberhalb des beweglichen Teils (15) und zwar so gesehen, wenn dieses die Verdichtungskammer (17) verläßt und in der Kammer (19) wirksam ist, in der die Zündung erfolgt, der besagte Motor ist dadurch gekennzeichnet, daß er Mittel (28) aufweist, die vorgesehen sind, um seine Schmierung sicherzustellen, diese Mittel (28) haben mindestens eine Vertiefung (40) in Form eines ringförmigen Segments, die in jedem der Flansche (3, 3') vorgesehen ist und so angeordnet ist, daß ihre Öffnung zur entsprechenden Basis (14) des Rotors gedreht ist, der mit einem einer Kammer (17, 19) gegenüberliegenden Flansch zusammenwirkt, die im anderen Flansch ausgebildet ist, diese Vertiefung (40) erstreckt sich über einen Sektor von 160° und die Vertiefung eines Flansches ist im Vergleich zu der des anderen Flansches um einen Winkel von 180° versetzt, Kanäle (41) für den Schmiermitteldurchtritt sind in den Flanschen vorgesehen, um einen Öl-Umlauf von einer Öffnung (42) aus zu schaffen, die an der Peripherie von jedem Flansch vorgesehen ist und die mit einer unter Druck arbeitenden Ölzufuhrvorrichtung verbunden ist, sowie einer bekannten Ölpumpe, die das Schmiermittel in die vorerwähnten Vertiefungen bringt, in die Lager, die in den Flanschen angebracht sind, um die mit dem Rotor formschlüssig verbundene Motorwelle (2) zu unterstützen, und in Nuten (43), in Form von ringförmigen Segmenten, die in Verbindung stehen mit den Vertiefungen (40) und die in den Flanschen angebracht sind und/oder im Rotor in den Zonen, wo diese miteinander in Verbindung stehen, jedes dieser vorerwähnten beweglichen Teile (15) hat mindestens eine fortlaufende Nut (44), die auf seinen Seitenflächen angebracht sind, die dazu bestimmt sind, mit den Seitenwänden und dem Boden der vorerwähnten Kammern (17, 19) zusammenzuwirken, diese Nut (44) wirkt mit den oben erwähnten Vertiefungen (40) beim Durchlauf der erwähnten beweglichen Teile (15) zusammen, wobei im Hinblick auf letztere ebenfalls Mittel (29) vorgesehen sind, um die Kühlung des Motors zu sichern.

2. Rotationsmotor nach Anspruch 1, dadurch gekennzeichnet, daß die Ausdehnung der Vertiefungen (40), senkrecht gemessen an der Achse der Motorwelle (2) geringer ist als die entsprechende Ausdehnung der vorerwähnten Kammern (17, 19), so daß die beweglichen Teile (15) auf der Seite der Flansche (3, 3') anliegen, die dem Rotor zugewandt ist, beiderseits der oben erwähnten Vertiefungen, wenn sie sich gegenüber den erwähnten Vertiefungen verschieben.

3. Rotationsmotor nach Anspruch 1, dadurch gekennzeichnet, daß die Ausdehnung der Vertiefungen (40), senkrecht gemessen an der Achse des Rotors, größer ist als die entsprechende Ausdehnung der vorerwähnten Kammern (17, 19), daß mindestens eine halbkreisförmige Führungsschiene (45), koaxial zur Welle (2) in jeder der Vertiefungen (40) vorgesehen ist, damit ihre Oberseite auf der gleichen Höhe liegt wie die Seite der Flansche (3, 3'), die mit den Basen (14) des Rotors (1) zusammenwirken, indem die beweglichen Teile (15) an dieser Schiene (45) zur Anlage kommen, während sie sich gegenüber den erwähnten Vertiefungen verschieben.

4. Rotationsmotor nach einem der Ansprüche 1 bis 3, dadurch gekennzeichnet, daß die Mittel (29), die vorgesehen sind, um die Abkühlung des Motors sicherzustellen, eine Kammer (46) für eine Kühlflüssigkeit aufweisen, die wenigstens in dem Flansch (3') vorgesehen ist, der die Aussparung aufweist, in der die beweglichen Teile (15) die vorerwähnte Kammer (19) abgrenzen, in der die Zündung und der Auslaß erfolgen, diese Kammer ist mit einem bekannten Kühlmittelkreislauf der Peripherie des Flansches in Verbindung.

5. Rotationsmotor nach einem der Ansprüche 1 bis 4, dadurch gekennzeichnet, daß er Mittel aufweist, die geeignet sind, die Schließung des Ventils (36) beim Anlassen des Motors zu veranlassen.

6. Rotationsmotor nach einem der Ansprüche 1 bis 5, dadurch gekennzeichnet, daß jeder der oben erwähnten Flansche (3, 3') zwei Aussparungen (10, 11–12, 13) aufweist, die zwei dichte Kammern (17, 18–19, 20) bilden, die sich über einen Sektor von 90° ausdehnen, wobei die eine im Vergleich zur anderen um 180° versetzt ist, die Kammern eines Flansches sind im Vergleich zu denen des anderen Flansches um 90° versetzt, der Rotor hat vier bewegliche Teile (15), die in Öffnungen (16) eine im Vergleich zur anderen jeweils um 90° versetzt angeordnet sind, die Zufuhr und die Verdichtung erfolgen gleichzeitig in den beiden Kammern (17, 18) eines Flansches, während die Zündung/Entspannung und der Auslaß gleichzeitig in den beiden Kammern (19, 20) des anderen Flansches erfolgen, jede dieser letzteren Kammern (19, 20) weist Mittel (23) der Zündung oder der Brennstoff-Einspritzung auf, wie auch eine um 180° versetzte Auslaßöffnung (24), eine Ansaugöffnung (21) ist in jeder der Kammern (17, 18) des anderen Flansches vorgesehen, wobei die Ansaugöffnungen (21) um 180° versetzt sind, die oben erwähnten Mittel (27) für die Sicherstellung der Überführung des Gemisches oder der Druckluft aus einer Kammer eines Flansches in die des anderen Flansches sind so angeordnet, daß unter Beachtung der Drehrichtung des Rotors, die Überführung von einer Kammer (17, 18), in der die Verdichtung erfolgt, in die Kammer (19, 20), in der die Zündung erfolgt, und zwar in die die unmittelbar nachgeschaltet ist liegt, geschieht, die diametral einander gegenüberliegenden beweglichen Teile (15) können frei voneinander sein oder jeweils zwei zu zwei, miteinander starr verbunden, wobei die Verbindung dieser besagten Teile durch die angeordneten Öffnungen hindurch erfolgt, zwei senkrechten Flächen folgend, durch die Achse der Welle (2) gehend, sei es in den Flanschen (3, 3') und der Welle (2), sei es durch diese Welle (2).

7. Rotationsmotor nach einem der Patentansprüche 1 bis 6, dadurch gekennzeichnet, daß er Mittel aufweist, wie Feinstellschrauben (9), um den Anpreßdruck der Flansche (3, 3') auf den Rotor (1) zu regeln.

EP 0 130 171 B1

FIG.1

FIG.4

11

FIG. 2

FIG. 3

FIG. 5

FIG. 6

FIG.7